# EUROPEAN PATENT APPLICATION

(11) **EP 4 645 403 A1**
(43) Date of publication of application: **05.11.2025**
(21) Application number: 24856639.0
(22) Date of filing: 01.07.2024
(51) Int. Cl.: H01M 4/04, B65H 18/02, B65H 19/30

(54) **APPARATUS FOR ELECTRODE WINDING AND BATTERY CELL COMPRISING ELECTRODES PRODUCED THEREBY, AND BATTERY PACK AND VEHICLE COMPRISING BATTERY CELLS**

(30) Priority: 18.08.2023 KR 20230108274
(71) Applicant: LG Energy Solution, Ltd., Seoul 07335 (KR)
(72) Inventor: JI, Seung-Hyun, Daejeon 34122 (KR)
(74) Representative: Goddar, Heinz J.
(86) International application number: PCT/KR2024/009224
(87) International publication number: WO 2025/042025

(57) **Abstract**

Disclosed are an electrode winding device, a battery cell including an electrode produced using the same, and a battery pack and a vehicle including the battery cell. An electrode winding device according to the present disclosure includes: a winding member configured to wind an electrode; a rotational shaft coupled to the winding member to rotate: a fastening chuck coupled to the rotational shaft and fastening the winding member; a support member configured to support the rotational shaft; a power source configured to provide power to the rotational shaft; and a releasing member coupled to the winding member and configured to release the winding member.

## Description

### TECHNICAL FIELD

The present application claims priority to Korean Patent Application No. 10-2023-0108274 filed on August 18, 2023 in the Republic of Korea, the disclosures of which are incorporated herein by reference.

The present disclosure relates to an electrode winding device, a battery cell including an electrode produced using the same, and a battery pack and a vehicle including the battery cell, and more specifically, it relates to an electrode winding device capable of automatic release, a battery cell including an electrode produced using the same, and a battery pack and a vehicle including the battery cell.

### BACKGROUND ART

In general, secondary batteries refer to batteries capable of being repeatedly charged and discharged, such as lithium-ion batteries, lithium-polymer batteries, nickelcadmium batteries, nickel-hydrogen batteries, nickel-zinc batteries, and the like.

Depending on the shape of the battery case, secondary batteries may be classified into cylindrical or prismatic batteries in which the electrode assembly is accommodated in a cylindrical or square metal can, and pouch-type batteries in which the electrode assembly is accommodated in a pouch-type case made of aluminum laminate sheets.

The secondary batteries may be manufactured by storing an electrode assembly including a positive electrode and a negative electrode, which are laminated with a separator therebetween, and an electrolyte in a case of various shapes, and sealing the case.

Here, the electrode used in the secondary battery is manufactured through various processes. For example, it may be manufactured through a roll-to-roll process in which an electrode foil having a coating layer of an electrode active material formed on the surface is wound and moved from roll to roll.

Meanwhile, after slitting the electrode (cutting the electrode to a predetermined size), the electrode is wound around a bobbin, and the worker manually moves the bobbin around which the electrode is wound to the electrode transfer stand.

However, in the conventional method of manually transferring the bobbin by the worker, the electrode may be damaged when transferring the bobbin, thereby deteriorating quality. In addition, the worker's labor is essential, and it is difficult to reduce costs, and there is also a risk of safety accidents for the worker.

### DISCLOSURE

### Technical Problem

The present disclosure has been designed to solve the problems of the related art, and therefore the present disclosure is directed to providing an electrode winding device capable of easily and automatically releasing a winding member around which an electrode is wound without the intervention of a worker, a battery cell including an electrode produced using the same, and a battery pack and a vehicle including the battery cell.

In addition, the present disclosure aims to provide an electrode winding device capable of preventing damage to the electrode and improving electrode quality, a battery cell including an electrode produced using the same, and a battery pack and a vehicle including the battery cell.

In addition, the present disclosure aims to provide an electrode winding device capable of reducing the labor of workers and costs, and lowering the risk of safety accidents for workers, and a battery cell including an electrode produced using the same, and a battery pack and a vehicle including the battery cell.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided an electrode winding device including: a winding member configured to wind an electrode; a rotational shaft coupled to the winding member to rotate: a fastening chuck coupled to the rotational shaft and configured to fasten the winding member; a support member configured to support the rotational shaft; a power source configured to provide power to the rotational shaft; and a releasing member coupled to the winding member and configured to release the winding member.

In an embodiment, the fastening chuck may move together with the rotational shaft to fasten the winding member or to be separated from the winding member.

In an embodiment, the support member may include a first support member and a second support member, wherein the rotational shaft may include a first rotational shaft coupled to the first support member and a second rotational shaft coupled to the second support member, and wherein the fastening chuck may include a first fastening chuck coupled to the first rotational shaft and a second fastening chuck coupled to the second rotational shaft.

In an embodiment, the support member may be disposed in an up-down direction, and the rotational shaft may move in a left-right direction.

In an embodiment, a first fastening chuck may be coupled to one end of the first rotational shaft, and a second fastening chuck may be coupled to one end of the second rotational shaft.

In an embodiment, the first fastening chuck may fasten the winding member at one end of the winding member, and the second fastening chuck may fasten the winding member at the other end of the winding member.

In an embodiment, the first fastening chuck and the second fastening chuck may be arranged on the same straight line as the winding member to fasten the winding member.

In an embodiment, the fastening chuck may include: a rim portion configured to define a circumference; and a fastening portion configured to move inside the rim portion to press the winding member.

In an embodiment, a plurality of fastening portions may be provided to be spaced apart from each other by a predetermined distance along the rim portion.

In an embodiment, the fastening portion may include: a contact portion formed in a shape corresponding to the winding member and configured to come into contact with the winding member; and a moving portion coupled to the contact portion and configured to move toward the winding member.

In an embodiment, the releasing member may include: a coupling arm configured to grip the winding member; and an actuator configured to provide power to the coupling arm.

In an embodiment, the coupling arm may include: a lower support configured to support the lower side of the winding member; a pair of side supports coupled to the lower support and configured to support the side surfaces of the winding member; and a connection support coupled to the lower side of the lower support and coupled to the actuator.

**In** an embodiment, the pair of side supports may be configured to be move along the lower support.

Meanwhile, according to another aspect of the present disclosure, there is provided a battery cell including an electrode produced using the electrode winding device described above, a battery pack including at least one battery cell described above, and a vehicle including at least one battery cell described above.

### Advantageous Effects

The embodiments of the present disclosure have the effect of easily and automatically releasing the winding member around which the electrode is wound without the intervention of the worker.

**In** addition, the embodiments of the present disclosure have the effect of preventing damage to the electrode and improving the electrode quality.

In addition, the embodiments of the present disclosure have the effect of reducing the labor of the worker and costs, and lowering the risk of safety accidents for the worker.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIGS. 1 to 5 are drawings illustrating a process in which an electrode is wound around and released from a winding member by an electrode winding device according to an embodiment of the present disclosure.
FIGS. 6 and 7 are drawings illustrating a process in which a fastening chuck fastens a winding member in an electrode winding device according to an embodiment of the present disclosure.
FIGS. 8 and 9 are drawings illustrating a process in which a coupling arm of a releasing member grips a winding member in an electrode winding device according to an embodiment of the present disclosure.
FIG. 10 is a drawing schematically illustrating the configuration of a battery pack including a battery cell including an electrode produced using an electrode winding device according to an embodiment of the present disclosure.
FIG. 11 is a drawing illustrating a vehicle including the battery pack in FIG. 10.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

**In** this specification, the expression "a member is 'coupled' or 'connected' to another member" is understood that the members are directly coupled or connected to each other, and that the members are indirectly coupled or connected through another member interposed therebetween.

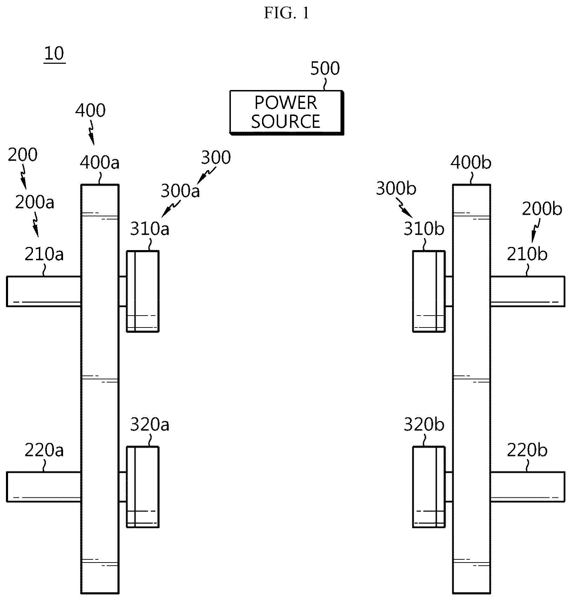

FIGS. 1 to 5 are drawings illustrating a process in which an electrode is wound around and released from a winding member by an electrode winding device according to an embodiment of the present disclosure.

Referring to FIGS. 1 to 5, an electrode winding device 10 according to an embodiment of the present disclosure includes a winding member 100, a rotational shaft 200, a fastening chuck 300, a support member 400, a power source 500, and a releasing member 600.

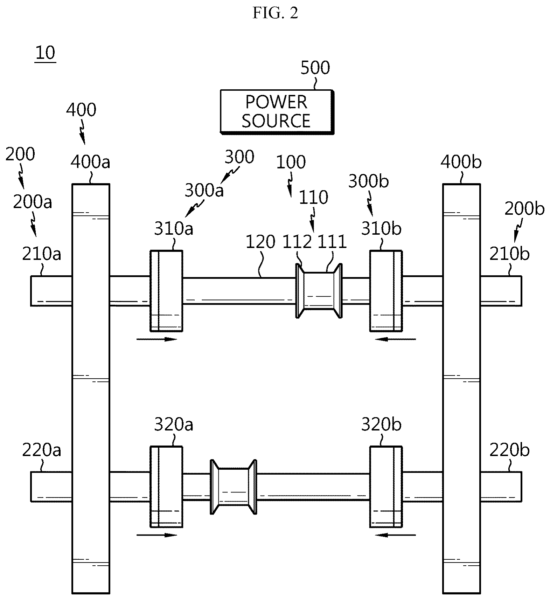

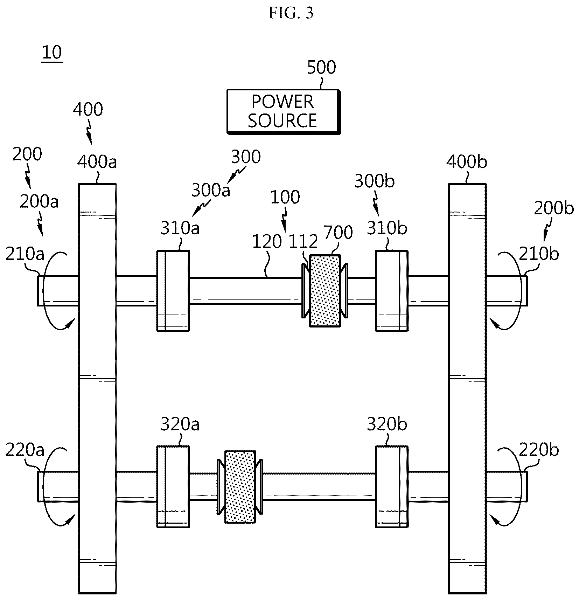

Referring to FIG. 3, an electrode 700 is wound around the winding member 100. The winding member 100 may be configured in various ways and, for example, may be configured to include a bobbin 110 and a bobbin support 120 as shown in FIG. 2. However, the winding member 100 is not limited thereto.

The electrode 700 is wound around the bobbin 110. Referring to FIG. 2, the bobbin 110 may include a center portion 111 around which the electrode 700 is wound, and side portions 112 extending from both sides of the center portion 111. The electrode 700 wound around the center portion 111 of the bobbin 110 does not departure from the center portion 111 by the side portions 112.

The bobbin support 120 is coupled to the bobbin 110. For example, the bobbin supports 120 may be coupled to both sides of the bobbin 110. Here, the bobbin support 120 and the bobbin 110 may be integrally manufactured, or may be manufactured separately and then coupled to each other. In addition, the bobbin support 120 may be fastened to a fastening chuck 300 described below.

The rotational shaft 200 is connected to the winding member 100 and rotates. A fastening chuck 300 is coupled to the rotational shaft 200, and the fastening chuck 300 fastens the winding member 100.

Referring to FIG. 1, the rotational shaft 200 may be coupled to and supported by the support member 400. Here, the rotational shaft 200 may be disposed in the upper and lower portions of the support member 400, respectively, but the present disclosure is not limited thereto.

In addition, the rotational shaft 200 is coupled to a power source 500 and rotates by receiving power from the power source 500. However, the specific connection configuration between the rotational shaft 200 and the power source 500 is not illustrated in FIGS. 1 to 5, and they may be connected in a conventional connection manner.

The fastening chuck 300 is coupled to the rotational shaft 200 and fastens the winding member 100. Here, as described above, in the case where the winding member 100 includes the bobbin 110 and the bobbin support 120, the fastening chuck 300 fastens the bobbin support 120.

The fastening chuck 300 rotates together with the rotational shaft 200. That is, when the rotational shaft 200 rotates, the fastening chuck 300 coupled to the rotational shaft 200 also rotates, so that the winding member 100 fastened to the fastening chuck 300 also rotates. As a result, the electrode 700 may be wound around the winding member 100.

The support member 400 supports the rotational shaft 200. The support member 400 may be configured in various shapes. Here, the support member 400 may have a through-hole formed into which the rotational shaft 200 is inserted.

Various types of bearings (not shown) may be coupled to the support member 400 to support the rotation of the rotational shaft 200. That is, the rotational shaft 200 may be coupled to a bearing (not shown) coupled to the through-hole of the support member 400 and may rotate, thereby reducing frictional force when the rotational shaft 200 rotates.

The power source 500 is connected to the rotational shaft 200 and provides power to the rotational shaft 200. Here, the power source 500 may be diverse and may include various types of motors, but is not necessarily limited thereto.

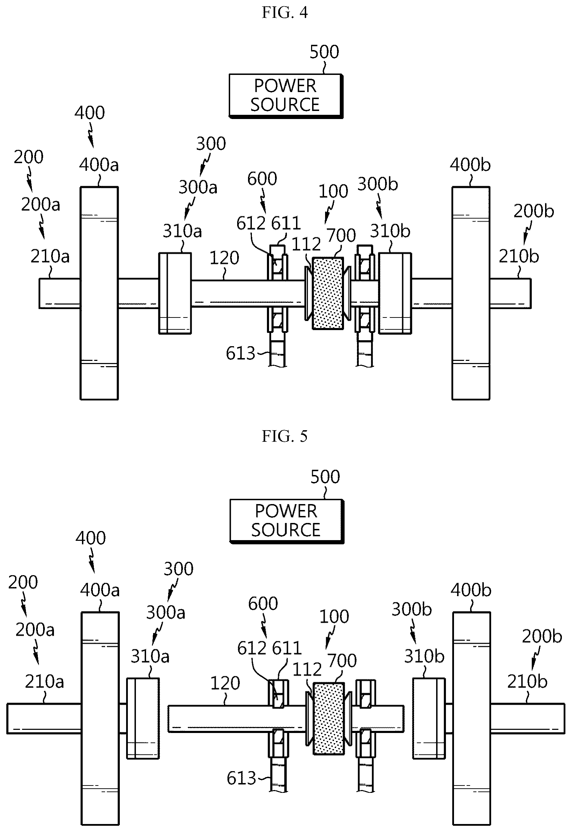

The releasing member 600 is coupled to the winding member 100 and releases the winding member 100. As described above, when the rotational shaft 200 rotates by the power provided from the power source 500, the rotational shaft 200, the fastening chuck 300, and the winding member 100 rotate so that the electrode 700 is wound around the winding member 100. Then, when the winding of the electrode 700 is completed, the releasing member 600 is coupled to the winding member 100, for example, to the bobbin support 120 of the winding member 100 as shown in FIGS. 4 and 5, so the fastening chuck 300 is separated from the bobbin support 120 of the winding member 100, and the releasing member 600 releases the winding member 100.

Referring to FIGS. 1 to 5, the process of the electrode 700 being wound around the winding member 100 and the release thereof will be described in detail.

Referring to FIG. 1, the rotational shaft 200 is not rotating and is in standby. At this time, the winding member 100 is separated from the fastening chuck 300.

Referring to FIG. 2, the winding member 100 is fastened to the fastening chuck 300. For example, in FIG. 2, the support members 400 may be arranged in the up-down direction, and the rotational shaft 200 may be arranged in the left-right direction on the support members 400 so as to move in the left-right direction. In addition, the fastening chuck 300 moves in the left-right direction along with the rotational shaft 200 to fasten the winding member 100.

For example, in the case where the winding member 100 includes the bobbin 110 and the bobbin support 120, the rotational shaft 200 at the position shown in FIG. 1 moves to the bobbin support 120 of the winding member 100 as shown in FIG. 2, and the fastening chuck 300 coupled to the rotational shaft 200 fastens the bobbin support 120.

Referring to FIG. 1 and FIG. 2, the support members 400 may include a first support member 400a and a second support member 400b. In addition, the rotational shafts 200 may include a first rotational shaft 200a and a second rotational shaft 200b. In addition, the fastening chucks 300 may include a first fastening chuck 300a and a second fastening chuck 300b. The first fastening chuck 300a may be coupled to the first rotational shaft 200a, and the second fastening chuck 300b may be coupled to the second rotational shaft 200b.

Referring to FIGS. 1 and 2, the first rotational shaft 200a is coupled to the first support member 400a. Here, the first rotational shaft 200a may include an upper first rotational shaft 210a disposed in the upper portion of the first support member 400a, and a lower first rotational shaft 220a disposed in the lower portion of the first support member 400a. An upper first fastening chuck 310a may be coupled to the upper first rotational shaft 210a, and a lower first fastening chuck 320a may be coupled to the lower first rotational shaft 220a.

In addition, the second rotational shaft 200b is coupled to the second support member 400b. Here, the second rotational shaft 200b may include an upper second rotational shaft 210b disposed in the upper portion of the second support member 400b and a lower second rotational shaft 220b disposed in the lower portion of the second support member 400b. An upper second fastening chuck 310b may be coupled to the upper second rotational shaft 210b, and a lower second fastening chuck 320b may be coupled to the lower second rotational shaft 220b.

The first fastening chuck 300a may be coupled to the first rotational shaft 200a, for example, to one end of the first rotational shaft 200a. Specifically, the upper first fastening chuck 310a may be coupled to one end of the upper first rotational shaft 210a, and the lower first fastening chuck 320a may be coupled to one end of the lower first rotational shaft 220a.

In addition, the second fastening chuck 300b may be coupled to the second rotational shaft 200b, for example, to one end of the second rotational shaft 200b. Specifically, the upper second fastening chuck 310b may be coupled to one end of the upper second rotational shaft 210b, and the lower second fastening chuck 320b may be coupled to one end of the lower second rotational shaft 220b.

Referring to FIG. 2, if the first rotational shaft 200a, for example, at least one of the upper first rotational shaft 210a and the lower first rotational shaft 220a, moves to the right (see the arrow) in FIG. 2 toward the bobbin support 120 of the winding member 100, the first fastening chuck 300a, for example, at least one of the upper first fastening chuck 310a and the lower first fastening chuck 320a, fastens the winding member 100 at one end of the winding member 100. That is, the upper first rotational shaft 210a and the lower first rotational shaft 220a may move together to the right in FIG. 2, only the upper first rotational shaft 210a may move, or only the lower first rotational shaft 220a may move.

In addition, if the second rotational shaft 200b, for example, at least one of the upper second rotational shaft 210b and the lower second rotational shaft 220b, moves to the left (see the arrow) in FIG. 2 toward the bobbin support 120 of the winding member 100, the second fastening chuck 300, for example, at least one of the upper second fastening chuck 310b and the lower second fastening chuck 320b, fastens the winding member 100 at the other end of the winding member 100. That is, the upper second rotational shaft 210b and the lower second rotational shaft 220b may move together to the left in FIG. 2, only the upper second rotational shaft 210b may move, or only the lower second rotational shaft 220b may move.

In addition, the first fastening chuck 300a and the second fastening chuck 300b may be arranged on the same straight line as the winding member 100 so as to fasten the winding member 100.

Referring to FIG. 3, the first rotational shaft 200a and the second rotational shaft 200b are connected to each other through the winding member 100 and rotate, and the first fastening chuck 300a coupled to the first rotational shaft 200a and the second fastening chuck 300b coupled to the second rotational shaft 200b also rotate, and the winding member 100 fastened to the first fastening chuck 300a and the second fastening chuck 300b also rotates, and when the winding member 100 rotates, the electrode 700 is wound around the winding member 100.

For example, in the case where the winding member 100 includes the bobbin 110 and the bobbin support 120, the electrode 700 is wound around the center portion 111 of the bobbin 110.

Here, a motor may be coupled to only one of the first rotational shaft 200a and the second rotational shaft 200b. That is, if the motor is coupled to only the first rotational shaft 200a such that the first rotational shaft 200a receives power from the motor, the second rotational shaft 200b coupled thereto through the winding member 100 also rotates. In addition, if the motor is coupled to only the second rotational shaft 200b such that the second rotational shaft 200b receives power from the motor, the first rotational shaft 200a coupled thereto through the winding member 100 also rotates.

Meanwhile, although the upper first rotational shaft 210a and the lower first rotational shaft 220a are illustrated to rotate together in FIG. 3, the present disclosure is not necessarily limited thereto, and only one of the upper first rotational shaft 210a and the lower first rotational shaft 220a may be configured to rotate to wind the electrode 700.

For example, the upper first rotational shaft 210a may rotate first such that the electrode 700 is wound around the winding member 100 coupled to the upper first rotational shaft 210a, and then the lower first rotational shaft 220a may rotate such that the electrode 700 is wound around the winding member 100 coupled to the lower first rotational shaft 220a.

Alternatively, the lower first rotational shaft 220a may first rotate such that the electrode 700 is wound around the winding member 100 coupled to the lower first rotational shaft 220a, and then the upper first rotational shaft 210a may rotate such that the electrode 700 is wound around the winding member 100 coupled to the upper first rotational shaft 210a.

Referring to FIG. 4, after the electrode 700 is wound around the winding member 100, the releasing member 600 moves toward the winding member 100 to be coupled to the winding member 100. For example, in the case where the winding member 100 includes the bobbin 110 and the bobbin support 120, the releasing member 600 may be coupled to the bobbin support 120. Here, the releasing member 600 may be configured in various forms, and may include, for example, a coupling arm 610, which will be described later.

Referring to FIG. 5, the releasing member 600 is coupled to the bobbin support 120 of the winding member 100, and the first fastening chuck 300a and the second fastening chuck 300b are separated from the bobbin support 120 of the winding member 100. Then, the releasing member 600 moves to transfer the winding member 100 around which the electrode 700 is wound to a holder (not shown) for transferring the electrode 700.

Meanwhile, in FIGS. 4 and 5, only the upper first rotational shaft 210a and the upper first fastening chuck 310a, the upper second rotational shaft 210b, and the upper second fastening chuck 310b are illustrated, and the lower first rotational shaft 220a and the lower first fastening chuck 320a, the lower second rotational shaft 220b, and the lower second fastening chuck 320b are omitted.

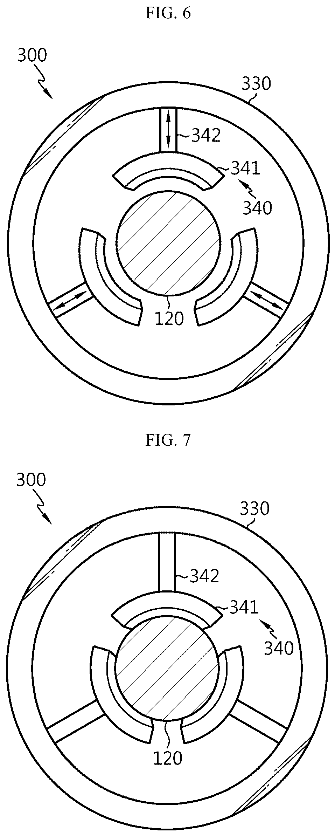

FIGS. 6 and 7 are drawings illustrating a process in which a fastening chuck fastens a winding member in an electrode winding device according to an embodiment of the present disclosure.

The fastening chuck 300 fastens the winding member 100. In the case where the winding member 100 includes the bobbin 110 and the bobbin support 120, the fastening chuck 300 fastens the bobbin support 120.

The fastening chuck 300 may be configured in various ways and, for example, referring to FIG. 6, may include a rim portion 330 and a fastening portion 340.

The rim portion 330 defines the circumference of the fastening chuck 300. The rim portion 330 may be formed in, for example, a circular shape with a hollow formed therein as shown in FIG. 6, but is not limited thereto.

The fastening portion 340 is configured to move inside the rim portion 330. A plurality of fastening portions 340 may be provided to be space apart from each other by a predetermined distance along the rim portion 330. Although three fastening portions 340 are arranged on the rim portion 330 in FIG. 6, the present disclosure is not necessarily limited thereto, and the number of fastening portions 340 may vary.

The fastening portion 340 may be configured to include a contact portion 341 and a moving portion 342. Referring to FIG. 7, the contact portion 341 is configured in a shape corresponding to the bobbin support 120 of the winding member 100 and comes into contact with the bobbin support 120 of the winding member 100. In addition, the moving portion 342 is coupled to the contact portion 341 and moves toward the bobbin support 120 of the winding member 100.

That is, if the moving portion 342 in FIG. 6 moves toward the bobbin support 120 of the winding member 100, the contact portion 341 coupled to the moving portion 342 also moves toward the bobbin support 120 of the winding member 100, so that the contact portion 341 comes into contact with the bobbin support 120 of the winding member 100 to fasten the winding member 100.

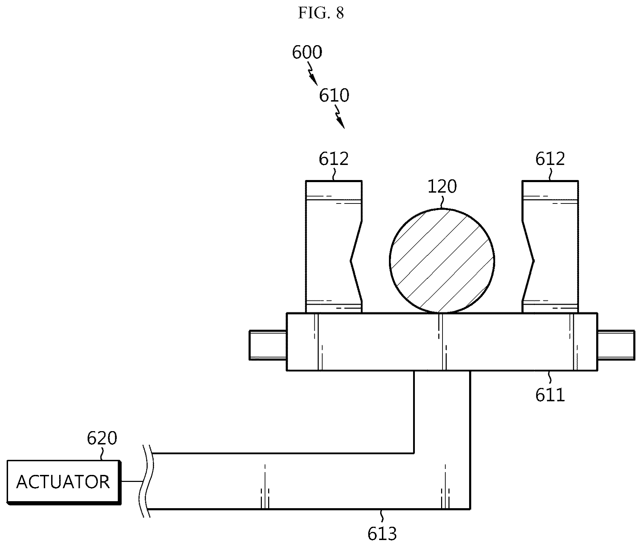

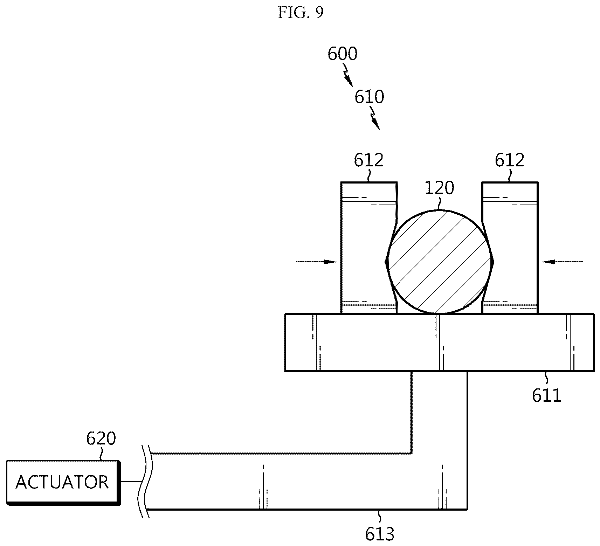

FIGS. 8 and 9 are drawings illustrating a process in which a coupling arm of a releasing member grips a winding member in an electrode winding device according to an embodiment of the present disclosure.

The releasing member 600 is coupled to the winding member 100 and releases the winding member 100. In the case where the winding member 100 includes the bobbin110 and the bobbin support 120, the releasing member 600 is coupled to the bobbin support 120.

The releasing member 600 may be configured in various ways and, referring to FIG. 8, may include, for example, a coupling arm 610 and an actuator 620.

The coupling arm 610 grips the bobbin support120 of the winding member 100. The coupling arm 610 may be, for example, a robot arm capable of gripping various objects. Here, the coupling arm 610 may include a lower support 611, a side support 612, and a connection support 613.

Referring to FIGS. 8 and 9, the lower support 611 may support the lower side of the bobbin support 120 of the winding member 100. Here, the lower support 611 may be a longitudinal plate, but is not limited thereto.

A pair of side supports 612 may be provided. The pair of side supports 612 may be coupled to the lower support 611 to support the side surfaces of the bobbin support 120. In addition, the pair of side supports 612 may be configured to move along the lower support 611.

For example, the pair of side supports 612 may move from the position in FIG. 8 to the bobbin support 120 to come into contact with the bobbin support 120 as shown in FIG. 9, thereby supporting the side surfaces of the bobbin support 120.

Then, when the release of the winding member 100 is completed by the releasing member 600, the pair of side supports 612 may move from the position in FIG. 9 to be separated from the bobbin support 120 as shown in FIG. 8.

The connection support 613 is coupled to the lower side of the lower support 611 and supports the lower support 611. In addition, the connection support 613 is coupled to an actuator 620.

The actuator 620 is configured to provide power to the coupling arm 610. The actuator 620 may be various, and may include, for example, at least one of various motors and cylinders, but is not limited thereto.

As described above, since the releasing member 600 is coupled to the winding member 100 to automatically release the winding member 100, there is the effect of easily and automatically releasing the winding member 100 around which the electrode 700 is wound without the intervention of a worker. In addition, there is the effect of preventing damage to the electrode 700 and improving the quality of the electrode 700. In addition, there is the effect of reducing the labor force of the worker and costs, and reducing the risk of safety accidents of the worker.

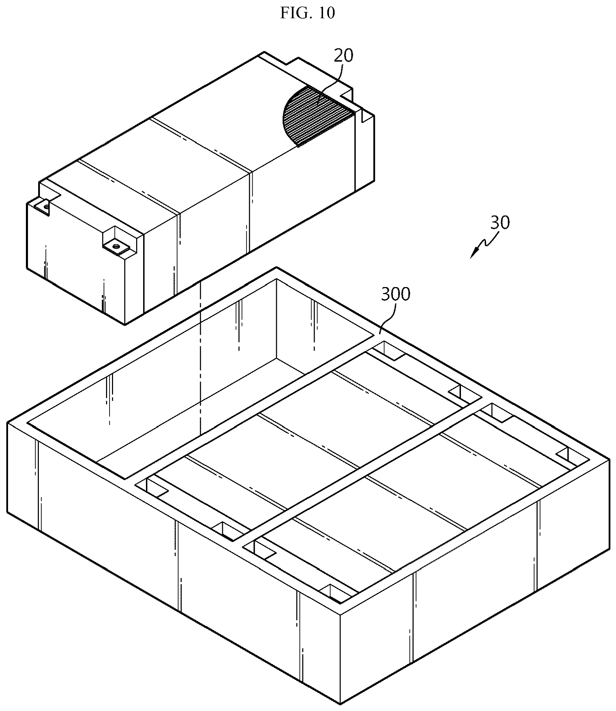

FIG. 10 is a drawing schematically illustrating the configuration of a battery pack including a battery cell including an electrode produced using an electrode winding device according to an embodiment of the present disclosure.

Referring to FIG. 10, a battery pack 30 according to an embodiment of the present disclosure may include one or more battery cells 20. Here, the battery cell 20 includes an electrode 700 produced using the electrode winding device 10 according to an embodiment of the present disclosure described above.

For example, the battery cell 20 may be manufactured using an electrode 700 wound around the winding member 100 by the electrode winding device 10 according to an embodiment of the present disclosure.

After slitting of the electrode 700 (cutting the electrode to a predetermined size) is completed, the electrode 700 is wound around the bobbin 110, and a worker manually moves the bobbin 110 around which the electrode 700 is wound to a holder for transporting the electrode 700.

In addition, the battery pack 30 may further include a pack housing 300 for storing the battery cell 20 and various devices for controlling charging and discharging of the battery cell 20, such as a BMS, a current sensor, a fuse, or the like.

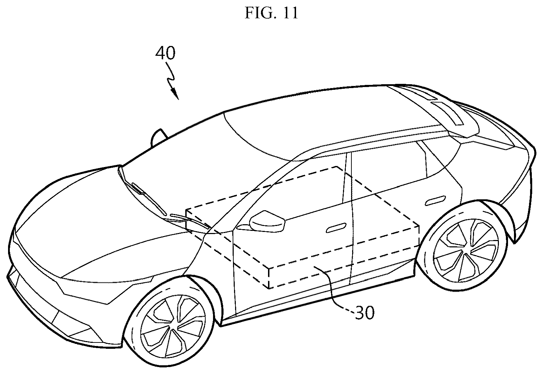

FIG. 11 is a drawing illustrating a vehicle including the battery pack in FIG. 10.

Referring to FIG. 11, a vehicle 40 according to an embodiment of the present disclosure may include one or more battery cells 20 including an electrode 700 produced using the electrode winding device 10 according to an embodiment of the present disclosure, or one or more battery packs 30 described above. Here, the vehicle 40 includes various vehicles that are designed to use electricity, such as electric vehicles or hybrid vehicles.

Although terms indicating directions such as up, down, left, and right directions are used in this specification, it is obvious to those skilled in the art to which the present disclosure pertains that these terms are only for convenience of explanation and may vary depending on the location of the target object or the location of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains. Therefore, the previously disclosed embodiments should be considered as those intended to describe the present disclosure, instead of those intended to limit the present disclosure. In other words, the true scope of the technical idea of the present disclosure is shown in the claims, and all differences within the scope equivalent thereto should be construed as being included in the present disclosure.

### Industrial Applicability

The present disclosure relates to an electrode winding device, a battery cell including an electrode produced using the same, and a battery pack and vehicle including the battery cell, and it is particularly applicable to industries related to secondary batteries.

## Claims

1. An electrode winding device comprising:
a winding member configured to wind an electrode;
a rotational shaft coupled to the winding member to rotate:
a fastening chuck coupled to the rotational shaft and configured to fasten the winding member;
a support member configured to support the rotational shaft;
a power source configured to provide power to the rotational shaft; and
a releasing member coupled to the winding member and configured to release the winding member.

2. The electrode winding device according to claim 1,
wherein the fastening chuck moves together with the rotational shaft to fasten the winding member or to be separated from the winding member.

3. The electrode winding device according to claim 1,
wherein the support member comprises a first support member and a second support member,
wherein the rotational shaft comprises a first rotational shaft coupled to the first support member and a second rotational shaft coupled to the second support member, and
wherein the fastening chuck comprises a first fastening chuck coupled to the first rotational shaft and a second fastening chuck coupled to the second rotational shaft.

4. The electrode winding device according to claim 1,
wherein the support member is disposed in an up-down direction, and
wherein the rotational shaft moves in a left-right direction.

5. The electrode winding device according to claim 3,
wherein a first fastening chuck is coupled to one end of the first rotational shaft, and
wherein a second fastening chuck is coupled to one end of the second rotational shaft.

6. The electrode winding device according to claim 5,
wherein the first fastening chuck fastens the winding member at one end of the winding member, and
wherein the second fastening chuck fastens the winding member at the other end of the winding member.

7. The electrode winding device according to claim 6,
wherein the first fastening chuck and the second fastening chuck are arranged on the same straight line as the winding member to fasten the winding member.

8. The electrode winding device according to claim 1,
wherein the fastening chuck comprises:
a rim portion configured to define a circumference; and
a fastening portion configured to move inside the rim portion to press the winding member.

9. The electrode winding device according to claim 8,
wherein a plurality of fastening portions are provided to be spaced apart from each other by a predetermined distance along the rim portion.

10. The electrode winding device according to claim 8,
wherein the fastening portion comprises:
a contact portion formed in a shape corresponding to the winding member and configured to come into contact with the winding member; and
a moving portion coupled to the contact portion and configured to move toward the winding member.

11. The electrode winding device according to claim 1,
wherein the releasing member comprises:
a coupling arm configured to grip the winding member; and
an actuator configured to provide power to the coupling arm.

12. The electrode winding device according to claim 11,
wherein the coupling arm comprises:
a lower support configured to support the lower side of the winding member;
a pair of side supports coupled to the lower support and configured to support the side surfaces of the winding member; and
a connection support coupled to the lower side of the lower support and coupled to the actuator.

13. The electrode winding device according to claim 12,
wherein the pair of side supports is configured to be move along the lower support.

14. A battery cell comprising an electrode produced using the electrode winding device according to any one of claims 1 to 13.

15. A battery pack comprising at least one battery cell according to claim 14.

16. A vehicle comprising at least one battery cell according to claim 14.
